# EUROPÄISCHE PATENTSCHRIFT

(11) **EP 0 547 019 B1**
(45) Veröffentlichungstag und Bekanntmachung des Hinweises auf die Patenterteilung: **24.05.1995**
(21) Anmeldenummer: 92890216.2
(22) Anmeldetag: 14.10.1992
(51) Int. Cl.: B60C 11/11, B60C 11/04, B60C 11/12

(54) **Fahrzeugreifen**
Vehicle tyre
Bandage pneumatique pour véhicule

(30) Priorität: 12.12.1991 AT 2471/91
(43) Veröffentlichungstag der Anmeldung: 16.06.1993
(73) Patentinhaber: Semperit Reifen Aktiengesellschaft, A-2514 Traiskirchen (AT)
(72) Erfinder: Diensthuber, Franz, A-2544 Schönau (AT)
(74) Vertreter: Vinazzer, Edith

(56) Entgegenhaltungen:
- EP-A- 0 139 606
- DE-A- 2 912 546
- DE-U- 9 016 454
- FR-A- 2 475 993
- PATENT ABSTRACTS OF JAPAN vol. 7, no. 145 (M-224)(1290) 24. Juni 1983

## Beschreibung

Die Erfindung betrifft einen Fahrzeugreifen in Radialbauart mit einem Laufflächenprofil mit einer Anzahl von in Umfangsrichtung verlaufenden Blockreihen, wobei zumindest zwei mittlere Blockreihen und zwei Schulterblockreihen vorgesehen sind, die jeweils durch Umfangsnuten voneinander getrennt sind und die durch Querrillen voneinander getrennte Einzelblöcke aufweisen, die mit im wesentlichen U-förmigen Einschnitten versehen sind, die den Flächenschwerpunkt der Blöcke umschließen und deren freie Schenkelenden zu den Umfangsnuten zu gerichtet sind, wobei in den innerhalb einer Blockreihe aufeinanderfolgenden Blöcken die freien Schenkelenden jeweils abwechselnd orientiert sind.

Ein Fahrzeugreifen mit einem derartigen Laufflächenprofil ist beispielsweise aus dem deutschen Patent 3005651 bekannt. Die in den Einzelblöcken der Blockreihen ausgebildeten U-förmigen Einschnitte sind dabei zwischen 2 und 4 mm breit, ihre Schenkelenden münden sämtlich in Umfangsnuten. Diese Einschnitte sollen einen Beitrag zur Vermeidung des Aquaplaningeffektes beitragen und somit im Bodenaufstandsbereich des Reifens Wasser schnell zur Seite abführen. Durch diese Einschnitte wird jedoch die Stabilität der Blöcke herabgesetzt. Auch ist dieses bekannte Profil hinsichtlich seiner Naßgriff- und seiner Schnee- bzw. Eisgriffeigenschaften verbesserungswürdig.

Hier setzt nun die Erfindung ein, deren Aufgabe darin besteht, einen Fahrzeugreifen der eingangs genannten Art hinsichtlich der erzielbaren Naß-, Eis- und Schneegriffeigenschaften und hinsichtlich der Handlingseigenschaften merklich zu verbessern, wobei aber weiterhin ein gutes Aquaplaningverhalten gegeben sein soll.

Gelöst wird die gestellte Aufgabe erfindungsgemäß dadurch, daß die U-förmigen Einschnitte als Feineinschnitte mit einer Breite von maximal 1 mm, insbesondere einer Breite von 0,4 bis 0,8 mm, ausgebildet sind, wobei nur die in den mittleren Blockreihen vorgesehenen Feineinschnitte mit ihren freien Schenkelenden in Umfangsnuten einmünden, und wobei in den Schulterblockreihen, in jenen Blöcken, wo die freien Schenkel der U-förmigen Feineinschnitte in Richtung zu den Laufflächenrandbereichen weisen, zwischen diesen Schenkeln jeweils eine Entwässerungsnut vorgesehen ist, die jeweils über die Bodenaufstandsfläche hinaus verläuft.

Durch die erfindungsgemäßen Maßnahmen wird ein Laufflächenprofil mit ausgezeichneten Naß-, Eis- und Schneegriffeigenschaften geschaffen. Durch die geringe Breite der Feineinschnitte ist dabei die Stabilität der Blöcke, die für ein gutes Fahr- und Handlingverhalten mitverantwortlich ist, nicht beeinträchtigt. Es hat sich ferner herausgestellt, daß die erfindungsgemäß angeordneten Entwässerungsnuten das Wasserableitvermögen des Profiles soweit positiv beeinflussen, daß insgesamt ein gemäß der vorliegender Erfindung gestaltetes Laufflächenprofil ein sehr zufriedenstellendes Wasserableitvermögen besitzt.

Dabei wirkt es sich auf das Abrollgeräusch sehr günstig aus, wenn die Blöcke sämtlicher Blockreihen, über die Laufflächenbreite betrachtet, derart angeordnet sind, daß sie Profilstreifen bilden, in welchen die U-förmigen Feineinschnitte jeweils in gleicher Richtung orientiert sind, wobei diese Orientierung, über die Reifenumfangsrichtung betrachtet, von Profilstreifen zu Profilstreifen abwechselt.

Bei einer bevorzugten Ausführungsform der Erfindung sind die Blöcke der Schulterblockreihen, relativ zur Querrichtung, gegensinnig zu den Blöcken der mittleren Blockreihen geneigt. Diese Maßnahme zeigt eine positive Wirkung auf die Fahreigenschaften von Reifen mit derartigen Profilen.

Bei einer weiteren Ausführungsform weisen die die Blöcke voneinander trennenden Querrillen einen zumindest im wesentlichen kontinuierlichen Verlauf auf und folgen schwach S-förmig gestalteten Kurven.

Zumindest die zwischen jeder Schulterblockreihe und der benachbarten mittleren Blockreihe ausgebildete Umfangsnut setzt sich, in Umfangsrichtung betrachtet, aus Nutabschnitten zusammen, die abwechselnd seitlich derart versetzt sind, daß jeder zweite Nutabschnitt identisch gestaltet ist. Dadurch wird die Spurrillenempfindlichkeit herabgesetzt.

Für gute Aquaplaningeigenschaften ist es dabei von Vorteil, wenn die Nutabschnitte der Umfangsnuten unterschiedliche Nutquerschnitte aufweisen, wobei jeweils eine Nutseitenwand einen größeren Neigungswinkel gegenüber der Normalen auf die Profiloberfläche aufweist als die gegenüberliegende Nutseitenwand. Dabei ist es günstig, wenn die radial weiter außen verlaufenden Nutabschnitte radial außen mit jener Nutseitenwand versehen sind, die den größeren Neigungswinkel aufweist.

Das Wasserableitvermögen des Laufflächenprofiles wird ferner noch dadurch günstig beeinflußt, daß die die Einzelblöcke der Schulterblockreihen voneinander trennenden Querrillen radial nach außen zu breiter werden. Zu diesem Zweck können auch die die Einzelblöcke in den mittleren Blockreihen voneinander trennenden Querrillen an ihren radial weiter außen liegenden Bereichen etwa trompetenförmig erweitert sein.

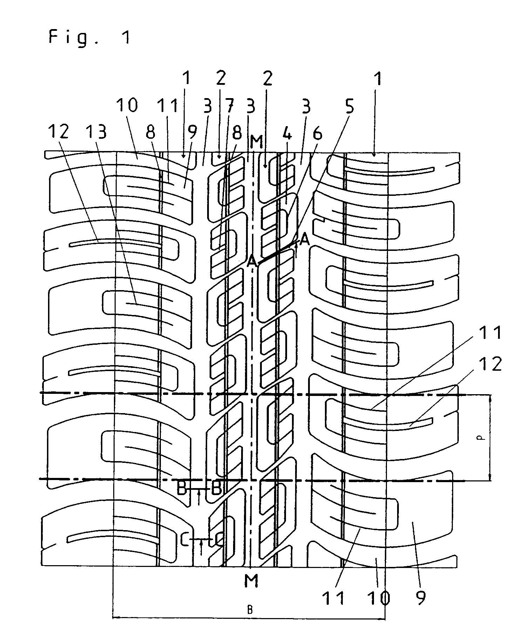

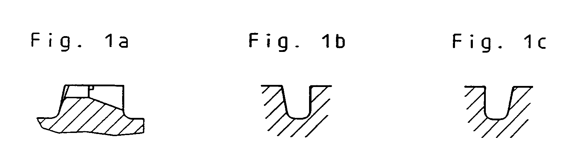

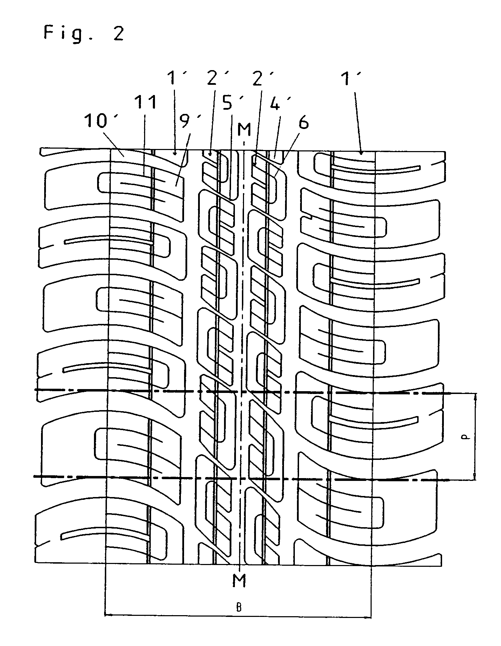

Weitere Merkmale, Vorteile und Einzelheiten der Erfindung werden nun anhand der Zeichnung, die einige Ausführungsbeispiele darstellt, näher beschrieben. Dabei zeigen Fig. 1 und Fig. 2 Draufsichten auf Teilabwicklungen von nach der Erfindung gestalteten Laufflächenprofilen, Fig. 1a einen Schnitt entlang der Linie A-A der Fig. 1, Fig. 1b einen Schnitt entlang der Linie B-B der Fig. 1 und Fig. 1c einen Schnitt entlang der Linie C-C der Fig. 1.

Das Laufflächenprofil gemäß Fig. 1 setzt sich, in Umfangsrichtung betrachtet, aus vier Blockreihen, zwei Schulterblockreihen 1 und zwei mittleren Blockreihen 2, zusammen. Die einzelnen Blockreihen 1, 2 sind durch relativ breite Umfangsnuten 3 voneinander getrennt, von denen die eine entlang der Äquatorlinie M-M verläuft. Mit B ist die Breite des Laufflächenprofiles in der Bodenaufstandsfläche bezeichnet. Die Breite B bestimmt somit jenen Oberflächenbereich des Laufflächenprofiles, der beim Abrollen im Normalbetrieb unter Nenndruck und Nennlast mit dem Untergrund in Berührung kommt. Die Einzelblöcke 4 der beiden mittleren Blockreihen 2 weisen eine im wesentlichen parallelogrammförmige Grundrißgestalt mit zwei in Umfangsrichtung verlaufenden und zwei gegenüber der Querrichtung geneigten Seitenkanten auf und sind durch relativ schmale Querrillen 5, deren Breite vorzugsweise 1 bis 3 Millimeter gewählt wird, voneinander getrennt. Dabei sind die die Querrillen 5 begrenzenden Blockkanten der Einzelblöcke 4 derart gestaltet, daß sich die Querrillen 5 an ihren den Schulterblockreihen 1 zugewandten Endbereichen etwa trompetenförmig erweitern. Die gegenseitige Anordnung der in den beiden mittleren Blockreihen 2 benachbarten Einzelblöcke 4 ist dabei so getroffen, daß Blockpaare vorliegen, so daß die inneren Endbereiche der Querrillen 5 zumindest im wesentlichen miteinander fluchten. Wie Fig. 1a zeigt, wird dabei die Tiefe der Querrillen 5 so getroffen, daß die Querrillen 5 im Bereich ihrer inneren, der mittleren Umfangsnut 3 zugewandten Endbereiche eine geringere Tiefe aufweisen, als im Bereich ihrer trompetenförmigen Erweiterungen, wo ihre Tiefe der Dessintiefe bzw. nahezu der Dessintiefe entspricht. Die Tiefenänderung kann kontinuierlich und/oder durch Ausbildung von Stufen erfolgen.

Jeder Einzelblock 4 der mittleren Blockreihen 2 ist mit einem U-förmigen Feineinschnitt 6 versehen, der den Flächenschwerpunkt des Blockes 4 umschließt und dessen Verlauf so gewählt ist, daß seine Schenkel zumindest im wesentlichen parallel zu den äußeren Blockkanten verlaufen. Die Schenkelenden der U-förmigen Feineinschnitte 6 laufen frei in eine der Umfangsnuten 3 aus. Dabei ist die Anordnung so getroffen, daß diese Schenkelenden in unmittelbar aufeinanderfolgenden Blöcken 4 abwechselnd in die Mittelumfangsnut 3 und die zugehörige seitlich liegende Umfangsnut 3 einmünden. Einander in Querrichtung zugeordnete Blockpaare der mittleren Blockreihen 2 weisen dabei jeweils gleich angeordnete bzw. orientierte Feineinschnitte 6 auf. Zwischen den in die Umfangsnuten 3 mündenden Enden der Feineinschnitte 6 ist pro Block 4 in dessen Mittelbereich jeweils eine Sacknut 7 vorgesehen, die parallel zu den Querrillen 5 verlaufend etwa bis zur Blockmitte reicht. Die Sacknuten 7 können jedoch auch länger oder kürzer ausgeführt werden. Im vorliegenden Ausführungsbeispiel reichen diese Sacknuten 7 bis zu einer die Blöcke 4 in Umfangsrichtung durchsetzenden und in Umfangsrichtung kontinuierlich durchlaufenden Umfangsrille 8, die ca. 1 mm breit und in einer Tiefe von 0,5 bis 2 mm ausgeführt ist. Die Ausgestaltung kann jedoch auch so getroffen werden, daß bei in Umfangsrichtung aufeinanderfolgenden Einzelblöcken 4 Umfangsrillenabschnitte vorgesehen sind, die jeweils seitlich gegeneinander versetzt sind.

Die Einzelblöcke 9 der Schulterbockreihen 1 verlaufen seitlich über die Breite B hinaus und haben, in Querrichtung betrachtet, leicht bogenförmig gekrümmte Begrenzungskanten, derart, daß die die Einzelblöcke 9 voneinander trennenden Querrillen 10, die breiter sind als die Querrillen 5 in den mittleren Blockreihen 2, sich von den Umfangsnuten 3 ausgehend nach außen zu kontinuierlich öffnen. Auch hier ist jeder Einzelblock 9 mit einem im wesentlichen U-förmigen Feineinschnitt 11 versehen, der jedoch in die jeweils benachbarte Umfangsnut 3 nicht einmündet. Auch in den Schulterblockreihen 1 sind dabei in aufeinanderfolgenden Blöcken 9 die freien Schenkel der U-förmigen Feineinschnitte 11 abwechselnd dem Laufflächenrand und der benachbarten Umfangsnut 3 zugewandt. Die freien Schenkel der U-förmigen Feineinschnitte 11 verlaufen auch in den Einzelblöcken 9 der Schulterblockreihen 1 zumindest im wesentlichen parallel zu den Außenkanten des jeweiligen Blockes 9 und zumindest über die Hälfte der Querdimension dieser Blöcke 9. Der die beiden freien Schenkel der U-förmigen Einschnitte 11 verbindende Abschnitt verläuft über mindestens ein Viertel der Umfangserstreckung des Blockes 9.

In jedem Block, wo die freien Schenkel der U-förmigen Feineinschnitte 11 zu den Laufflächenrandbereichen weisen, ist zwischen diesen Schenkeln jeweils eine zusätzliche Entwässerungsnut 12 angeordnet, wobei diese Entwässerungsnuten 12 laufflächenaußenseitig über die durch die Breite B bestimmte Bodenaufstandsfläche hinauslaufen. Die Entwässerungsnuten 12 werden zwischen 1 und 3 mm breit gewählt, im vorliegenden Ausführungsbeispiel beträgt ihre Breite 2 mm, die Tiefe dieser Entwässerungsnuten 12 kann im Bodenaufstandsbereich bis zur Dessintiefe gewählt werden, und wird bevorzugt mindestens 2 mm betragen. Auch in den Schulterblockreihen 1 ist jeweils eine schmale Umfangsrille 8 vorgesehen, deren Ausgestaltung und Anordnung wie bereits bei den Mittelblockreihen 2 beschrieben, erfolgt bzw. erfolgen kann. Wie dargestellt, wird dabei die Ausgestaltung im Zusammenhang mit der Entwässerungsnut 12 vorzugsweise so getroffen, daß das radial innere Ende der Entwässerungsnuten 12 bis zur Umfangsrille 8 reicht.

Die Blöcke 4, 9 sämtlicher Blockreihen 1, 2 sind, über die Laufflächenbreite betrachtet, derart angeordnet, daß sie Profilstreifen P bilden, in welchen die U-förmigen Feineinschnitte 6, 11 jeweils gleich orientiert sind. Diese Orientierung wechselt nun in Umfangsrichtung von Profilstreifen zu Profilstreifen. In Fig. 1 ist durch zwei strichpunktierte Linien einer dieser Profilstreifen P angedeutet. Somit ist, in Umfangsrichtung betrachtet, jeder zweite Profilstreifen P gleichartig gestaltet. Bezüglich der Dimensionierung der Blöcke 4, 9, der Einschnitte 6, 11 etc. können sich gleichartige Profilstreifen voneinander unterscheiden, da, wie an sich bekannt, auf diese Weise eine Verminderung des Abrollgeräusches erzielt wird.

Jene Einzelblöcke 9 der Schulterblockreihen 1, die keine Entwässerungsnut aufweisen, sind mit einem zusätzlichen, etwa mittig und in Querrichtung verlaufenden Feineinschnitt 13 versehen.

Die Einzelblöcke 9 der Schulterblockreihen 1 sind zu den Blöcken 4 der mittleren Blockreihen 2 gegensinnig und unter einem flacheren Winkel relativ zur Querrichtung geneigt. Dabei ist jeder Einzelblock 9 einem Einzelblock 4 aus der benachbarten Mittelblockreihe 2 zugewandt. In den Umfangsnuten 3 sind die durch die Blöcke 4, 9 begrenzten Nutbereiche, in Umfangsrichtung betrachtet, abwechselnd seitlich versetzt, sodaß jeder zweite Nutabschnitt übereinstimmend verläuft und gestaltet ist. Wie aus Fig. 1b und Fig. 1c ersichtlich ist, haben die gegeneinander seitlich versetzten Nutabschnitte unterschiedliche Nutquerschnitte. Die radial weiter außen verlaufenden Nutabschnitte sind, ebenfalls radial außen mit einer Nutseitenwand versehen, die einen größeren Neigungswinkel gegenüber der Normalen auf die Profiloberfläche aufweist, als die gegenüberliegende Seitenwand, die bevorzugt in Richtung dieser Normalen verläuft. Bei den zweiten Nutabschnitten ist die Ausgestaltung umgekehrt getroffen.

Das Laufflächenprofil gemäß Fig. 2 unterscheidet sich von jenem gemäß Fig. 1 darin, daß die Neigung aller Blöcke 4', 9' in sämtlichen Blockreihen 1', 2' gegenüber der Querrichtung in gleichem Sinn erfolgt, wobei die Querrillen 5', 10' von Laufflächenrand zu Laufflächenrand einen kontinuierlichen Verlauf aufweisen und schwach S-förmig gestalteten Kurven folgen. Mit strichpunktierten Linien ist wiederum ein Profilstreifen P' eingezeichnet. Auf eine weitere gesonderte Beschreibung der Fig. 2 und dem Eintragen von zusätzlichen Bezugsziffern in dieser Zeichnungsfigur wurde verzichtet.

Die Erfindung ist auf die dargestellten Ausführungsbeispiele nicht eingeschränkt. So ist es insbesondere möglich, mehr als zwei mittlere Blockreihen vorzusehen. Die breiten Umfangsnuten können ferner als in Umfangsrichtung gerade verlaufende Nuten ausgestaltet werden. Auf die schmalen Umfangsrillen könnte verzichtet werden, ebenso auf die Sacknuten in den mittleren Blockreihen.

## Patentansprüche

1. Fahrzeugreifen in Radialbauart mit einem Laufflächenprofil mit einer Anzahl von in Umfangsrichtung verlaufenden Blockreihen, wobei zumindest zwei mittlere Blockreihen und zwei Schulterblockreihen vorgesehen sind, die jeweils durch Umfangsnuten voneinander getrennt sind und die durch Querrillen voneinander getrennte Einzelblöcke aufweisen, die mit im wesentlichen U-förmigen Einschnitten versehen sind, die den Flächenschwerpunkt der Blöcke umschließen und deren freie Schenkelenden zu den Umfangsnuten zu gerichtet sind, wobei in den innerhalb einer Blockreihe aufeinanderfolgenden Blöcken die freien Schenkelenden jeweils abwechselnd orientiert sind, dadurch gekennzeichnet, daß die U-förmigen Einschnitte als Feineinschnitte (6, 11) mit einer Breite von maximal 1 mm, insbesondere einer Breite von 0,4 bis 0,8 mm, ausgebildet sind, wobei nur die in den mittleren Blockreihen (2, 2') vorgesehenen Feineinschnitte (6) mit ihren freien Schenkelenden in Umfangsnuten (3) einmünden, und wobei in den Schulterblockreihen (1, 1'), in jenen Blöcken (9, 9') wo die freien Schenkel der U-förmigen Feineinschnitte (11) in Richtung zu den Laufflächenrandbereichen weisen, zwischen diesen Schenkeln jeweils eine Entwässerungsnut (12) vorgesehen ist, die jeweils über die Bodenaufstandsfläche hinaus verläuft.

2. Fahrzeugreifen nach Anspruch 1, dadurch gekennzeichnet, daß die Blöcke (4, 9) sämtlicher Blockreihen (1, 2), über die Laufflächenbreite betrachtet, derart angeordnet sind, daß sie Profilstreifen (P) bilden, in welchen die U-förmigen Feineinschnitte (6, 11) jeweils in gleicher Richtung orientiert sind, wobei diese Orientierung, über die Reifenumfangsrichtung betrachtet von Profilstreifen zu Profilstreifen abwechselt.

3. Fahrzeugreifen nach Anspruch 1 oder Anspruch 2, dadurch gekennzeichnet, daß die Blöcke (9) der Schulterblockreihen (1), relativ zur Querrichtung, gegensinnig zu den Blöcken (4) der mittleren Blockreihen (2) geneigt sind.

4. Fahrzeugreifen nach Anspruch 1 oder Anspruch 2, dadurch gekennzeichnet, daß die die Blöcke (4', 9') voneinander trennenden Querrillen (5', 10') einen zumindest im wesentlichen kontinuierlichen Verlauf aufweisen und schwach S-förmig gestalteten Kurven folgen.

5. Fahrzeugreifen nach einem der Ansprüche 1 bis 4, dadurch gekennzeichnet, daß zumindest die zwischen jeder Schulterblockreihe (1, 1') und der benachbarten mittleren Blockreihe (2, 2') ausgebildete Umfangsnut (3) sich, in Umfangsrichtung betrachtet, aus Nutabschnitten zusammensetzt, die abwechselnd seitlich derart versetzt sind, daß jeder zweite Nutabschnitt identisch gestaltet ist.

6. Fahrzeugreifen nach Anspruch 5, dadurch gekennzeichnet, daß die Nutabschnitte der Umfangsnuten unterschiedliche Nutquerschnitte aufweisen, wobei jeweils eine Nutseitenwand einen größeren Neigungswinkel gegenüber der Normalen auf die Profiloberfläche aufweist als die gegenüberliegende Nutseitenwand.

7. Fahrzeugreifen nach Anspruch 6, dadurch gekennzeichnet, daß die radial weiter außen verlaufenden Nutabschnitte radial außen mit jener Nutseitenwand versehen sind, die den größeren Neigungswinkel aufweist.

8. Fahrzeugreifen nach einem der Ansprüche 1 bis 7, dadurch gekennzeichnet, daß die die Einzelblöcke (9, 9') der Schulterblockreihen (1, 1') voneinander trennenden Querrillen (10, 10') radial nach außen zu breiter werden.

9. Fahrzeugreifen nach einem der Ansprüche 1 bis 7, dadurch gekennzeichnet, daß die die Einzelblöcke (4, 4') in den mittleren Blockreihen (2, 2') voneinander trennenden Querrillen (5, 5') an ihren radial weiter außen liegenden Bereichen etwa trompentenförmig erweitert sind.

## Claims

1. Vehicle tyre of a radial type of construction, having a tread surface profile with a number of rows of blocks extending in the circumferential direction, at least two central rows of blocks and two rows of shoulder blocks being provided, which are respectively separated from one another by circumferential grooves and have individual blocks, which are separated from one another by transverse grooves and are provided with substantially U-shaped incisions, which surround the centre of the blocks and the free portion ends of which are orientated towards the circumferential grooves, the free portion ends being alternately orientated in the blocks which follow one another internally of a row of blocks, characterised in that the U-shaped incisions are configured as fine incisions (6, 11) having a maximum width of 1 mm, more especially having a width of between 0.4 and 0.8 mm, only the fine incisions (6), which are provided in the central rows of blocks (2, 2'), terminating with their free portion ends in circumferential grooves (3), and a drainage groove (12) being provided in each of the rows of shoulder blocks (1, 1'), in those blocks (9, 9') where the free portions of the U-shaped fine incisions (11) point in the direction towards the tread surface edge regions, between these portions, said drainage groove extending beyond the ground supporting face.

2. Vehicle tyre according to claim 1, characterised in that the blocks (4, 9) of all of the rows of blocks (1, 2), when viewed over the tread surface width, are disposed in such a manner that they form profile strips (P), in which the U-shaped fine incisions (6, 11) are each orientated in the same direction, this orientation, when viewed over the circumferential direction of the tyre, alternating from profile strip to profile strip.

3. Vehicle tyre according to claim 1 or claim 2, characterised in that the blocks (9) of the rows of shoulder blocks (1), relative to the transverse direction, are inclined in the opposite direction to the blocks (4) of the central rows of blocks (2).

4. Vehicle tyre according to claim 1 or claim 2, characterised in that the transverse grooves (5', 10'), which separate the blocks (4', 9') from one another, have a configuration which is at least substantially continuous and follow curves which have a gentle S-shaped form.

5. Vehicle tyre according to one of claims 1 to 4, characterised in that at least the circumferential groove (3), which is provided between each row of shoulder blocks (1, 1') and the adjacent central row of blocks (2, 2'), comprises groove portions, when viewed with respect to the circumferential direction, said groove portions being alternately offset laterally in such a manner that every second groove portion has an identical configuration.

6. Vehicle tyre according to claim 5, characterised in that the groove portions of the circumferential grooves have variable groove cross-sections, each lateral groove wall having a greater angle of inclination relative to the normal on the profile surface than the oppositely situated lateral groove wall.

7. Vehicle tyre according to claim 6, characterised in that the radially further externally extending groove portions are provided radially externally with that lateral groove wall which has the greater angle of inclination.

8. Vehicle tyre according to one of claims 1 to 7, characterised in that the transverse grooves (10, 10'), which separate the individual blocks (9, 9') of the rows of shoulder blocks (1, 1') from one another, become wider radially outwardly.

9. Vehicle tyre according to one of claims 1 to 7, characterised in that the transverse grooves (5, 5'), which separate the individual blocks (4, 4') in the central rows of blocks (2, 2') from one another, are widened in a substantially trumpet-shaped manner at their radially further externally situated regions.

## Revendications

1. Pneumatique de type radial pour véhicule, dont le profilé de la surface de roulement comprend un certain nombre de rangées de blocs disposées en direction périphérique, constituées par au moins deux rangées de blocs centrales et deux rangées de blocs d'épaulement, qui sont respectivement séparées les unes des autres par des rainures périphériques, comprennent des blocs individuels séparés les uns des autres par des stries transversales et pourvus d'entailles sensiblement en forme de U qui entourent le centre de gravité superficiel des blocs et dont les extrémités libres des branches sont dirigées vers les rainures périphériques, les extrémités libres des branches à l'intérieur d'une rangée de blocs successifs étant respectivement orientées de façon alternée, caractérisé en ce que les entailles en forme de U sont constituées par de fines entailles (6, 11) d'une largeur de 1 mm au maximum, et notamment d'une largeur comprise entre 0,4 et 0,8 mm, seules les fines entailles (6) prévues dans les rangées de blocs centrales (2, 2') débouchant par les extrémités libres de leurs branches dans des rainures périphériques (3), et en ce qu'il est prévu dans les rangées de blocs d'épaulement (1, 1'), dans les blocs (9, 9') où les branches libres des fines entailles en forme de U (11) s'étendent en direction des zones de bord de la surface de roulement et respectivement entre ces branches, une rainure d'évacuation d'eau (12) qui se prolonge au-delà de la surface d'appui sur le sol.

2. Pneumatique pour véhicule selon la revendication 1, caractérisé en ce que les blocs (4, 9) de toutes les rangées de blocs (1, 2), vus dans le sens de la largeur de la surface de roulement, sont disposés de manière à former des bandes de profilé (P) dans lesquelles les fines entailles en forme de U (6, 11) sont toutes orientées dans la même direction, cette orientation alternant de bande à bande du profilé.

3. Pneumatique pour véhicule selon la revendication 1 ou la revendication 2, caractérisé en ce que les blocs (9) des rangées de blocs d'épaulement (1) sont inclinés par rapport à la direction transversale en sens contraire des blocs (4) des rangées de blocs centrales (2).

4. Pneumatique pour véhicule selon la revendication 1 ou la revendication 2, caractérisé en ce que les stries transversales (5', 10') qui séparent les blocs (4', 9') les uns des autres ont une forme au moins sensiblement continue et sont disposées selon la forme d'un S de faible courbure.

5. Pneumatique pour véhicule selon l'une quelconque des revendications 1 à 4, caractérisé en ce que la rainure périphérique (3) constituée entre chaque rangées de blocs d'épaulement (1, 1') et la rangée de blocs centrale voisine (2, 2'), vue dans la direction périphérique, est constituée par l'assemblage de sections de rainure qui sont décalées latéralement et de façon alternée les unes par rapport aux autres, chacune des secondes sections de rainure étant de constitution identique.

6. Pneumatique pour véhicule selon la revendication 5, caractérisé en ce que les sections transversales des rainures périphériques sont différentes, une paroi latérale des rainures présentant un angle d'inclinaison plus important par rapport à la normale à la surface du profilé que la paroi latérale opposée des rainures.

7. Pneumatique pour véhicule selon la revendication 6, caractérisé en ce que les sections de rainure qui sont situées radialement le plus à l'extérieur sont munies radialement à l'extérieur de la paroi latérale qui présente l'angle d'inclinaison le plus important.

8. Pneumatique pour véhicule selon l'une quelconque des revendications 1 à 7, caractérisé en ce que les stries transversales (10, 10') qui séparent les uns des autres les blocs individuels (9, 9') des rangées de blocs d'épaulement (1, 1') vont en s'élargissant radialement vers l'extérieur.

9. Pneumatique pour véhicule selon l'une quelconque des revendications 1 à 7, caractérisé en ce que les stries transversales (5, 5') qui séparent les blocs individuels (4, 4') des rangées de blocs centrales (2, 2') les uns des autres vont en s'élargissant sensiblement sous une forme évasée dans leurs parties qui sont situées radialement le plus à l'extérieur.
